# EUROPÄISCHE PATENTSCHRIFT

(11) **EP 1 693 798 B1**
(45) Veröffentlichungstag und Bekanntmachung des Hinweises auf die Patenterteilung: **10.12.2008**
(21) Anmeldenummer: 05003534.4
(22) Anmeldetag: 18.02.2005
(51) Int. Cl.: G06T 7/00, G06T 7/60

(54) **Schaft- und Schenkelhalsachsenbestimmung und dreidimensionale Rekonstruktion**
Determination of the femoral shaft axis and the femoral neck axis and its 3D reconstruction
Détermination de l'axe de la tige fémorale et de l'axe du col du fémur et reconstruction à trois dimensions

(43) Veröffentlichungstag der Anmeldung: 23.08.2006
(73) Patentinhaber: BrainLAB AG, 85551 Kirchheim/Heimstetten (DE)
(72) Erfinder: Tuma, Gregor, 81675 München (DE); Schubert, Mario, 85586 Poing (DE); Grünschläger, Frank, 85622 Feldkirchen (DE); Haimerl, Martin, Dr., 82205 Gilching (DE)
(74) Vertreter: Gassenhuber, Andreas

(56) Entgegenhaltungen:
- LIVYATAN H ET AL: "Gradient-based 2-D/3-D rigid registration of fluoroscopic X-ray to CT" IEEE TRANSACTIONS ON MEDICAL IMAGING IEEE USA, Bd. 22, Nr. 11, November 2003 (2003-11), Seiten 1395-1406, XP002331109 ISSN: 0278-0062
- KISS J ET AL: "ROENTGEN STEREOPHOTOGRAMMETRIC ANALYSIS FOR ASSESSING MIGRATION OF TOTAL HIP REPLACEMENT FEMORAL COMPONENTS" PROCEEDINGS OF THE INSTITUTION OF MECHANICAL ENGINEERS. JOURNAL OF ENGINEERING IN MEDICINE. PART H, MECHANICAL ENGINEERING PUBLICATIONS LTD, LONDON, GB, Bd. 209, Nr. H03, 1995, Seiten 169-175, XP001010059 ISSN: 0954-4119
- TAMAKI T ET AL: "FEMORAL SHAPE ANALYSIS BY BI-PLANE X-RAY PHOTOGRAMMETRY" BULLETIN OF THE JSME, JAPANESE SOCIETY OF MECHANICAL ENGINEERS, TOKYO,, JP, Bd. 29, Nr. 249, März 1986 (1986-03), Seiten 666-673, XP008048138 ISSN: 0021-3764
- FLEUTE M ET AL: "NONRIGID 3-D/2-D REGISTRATION OF IMAGES USING STATISTICAL MODELS" LECTURE NOTES IN COMPUTER SCIENCE, SPRINGER VERLAG, NEW YORK, NY, US, 19. September 1999 (1999-09-19), Seiten 138-147, XP008010626 ISSN: 0302-9743
- BROWBANK I ET AL: "ROBOTIC-ASSISTED INTERNAL FIXATION OF HIP FRACTURES: A FLUOROSCOPY-BASED INTRAOPERATIVE REGISTRATION TECHNIQUE" PROCEEDINGS OF THE INSTITUTION OF MECHANICAL ENGINEERS. JOURNAL OF ENGINEERING IN MEDICINE. PART H, MECHANICAL ENGINEERING PUBLICATIONS LTD, LONDON, GB, Bd. 214, Nr. PART H02, 2000, Seiten 165-179, XP000954513 ISSN: 0954-4119

## Beschreibung

Die vorliegende Erfindung betrifft Verfahren und Vorrichtungen zum Bestimmen von charakteristischen Achsen einer Körperstruktur, insbesondere zum Bestimmen der Schaft- und Schenkelhals- oder Neck-Achse eines Oberschenkelknochens oder Femurs, sowie zur individuellen Rekonstruktion eines dreidimensionalen Objekts aus zweidimensionalen Aufnahmen, insbesondere Röntgenbildern.

Bei Operationen im Bereich der Hüfte und insbesondere zur Vorbereitung eines chirurgischen Eingriffs zum Einsetzen eines künstlichen Hüftgelenkes, wie zum Beispiel zum Bestimmen der Größe und Position eines Implantats, ist neben der Bestimmung der Lage und Geometrie der Hüfte auch die Bestimmung der Lage und Geometrie oder Abmessungen des Femurs wichtig, wobei insbesondere der proximale Femur und der Femurkopf von besonderer Bedeutung für einen Chirurgen zur Vorbereitung oder Planung zum Einsetzen eines künstlichen Gelenkkopfes sind. Die femorale Komponente des künstlichen Hüftgelenkes sollte in der Knochenstruktur des Femurs in einer bestimmten Position in Bezug auf die Schaft- und Schenkelhals-Achse platziert werden, um das korrekte Funktionieren des künstlichen Hüftgelenkes sicherzustellen und eine lange Lebensdauer des künstlichen Gelenks zu ermöglichen. Insbesondere ist ein guter Sitz des Femurimplantats im Schenkelhals und/oder im Schaftkanal wichtig für eine gute Lastverteilung des Implantats.

Während eines chirurgischen Eingriffs verlässt sich ein Chirurg gewöhnlich auf die visuelle Begutachtung der freigelegten Knochenstruktur, um den Sitz des Femurimplantats zu bestimmen. Jedoch werden immer häufiger chirurgische Eingriffe so vorgenommen, dass nur möglichst kleine Bereiche aufgeschnitten werden, so dass es nicht mehr möglich ist nur durch visuelle Begutachtung die Lage eines Implantats zu bestimmen. Häufig werden zweidimensionale Röntgenbilder verwendet, um zusätzliche Informationen bezüglich der gewünschten Lage von Implantaten relativ zu einem Knochen zu erhalten. Jedoch steht einem Chirurgen mit einem zum Teil verrauschten zweidimensionalen Röntgenbild lediglich eine grob durch unterschiedliche Graustufen dargestellte Abbildung der betreffenden Körperstruktur zur Verfügung, welcher häufig nicht präzise die gewünschten Informationen zur Bestimmung der dreidimensionalen Koordinaten zum richtigen Platzieren eines Implantats in einem Knochen entnommen werden können.

Alternativ werden deswegen häufig Computertomographie (CT)-Aufnahmen der betreffenden Körperstruktur erzeugt, was jedoch im Vergleich zu den oben erwähnten zweidimensionalen Röntgenaufnahmen eine erheblich höhere Strahlenbelastung für den Patienten bedeutet.

Aus LIVYATAN H. ET AL: "Gradient-based 2-D/3-D rigid registration of fluoroscopic X-ray to CT" IEEE TRANSACTIONS ON MEDICAL IMAGING IEEE USA, Bd. 22, Nr. 11, November 2003 (2003-11), Seiten 1395-1406, XP002331109 ISSN: 0278-0062 ist eine rigide Gradientenbasierte 2-D/3-D Registrierung von fluoroskopischen Röntgenbildern auf CT bekannt. Dabei wird zunächst eine Schätzung der Ausgangsposition vorgenommen, eine grobe auf der Geometrie basierende Registrierung der Knochenkonturen vorgenommen und zur Verfeinerung eine Gradienten-Projektions-Registrierung (GPR) der Kanten-Pixel vorgenommen.

Aus KISS J. ET AL: "ROENTGEN STEREOPHOTOGRAMMETRIC ANALYSIS FOR ASSESSING MIGRATION OF TOTAL HIP REPLACEMENT FEMORAL COMPONENTS" PROCEEDINGS OF THE INSTITUTION OF MECHANICAL ENGINEERS, JOURNAL OF ENGINEERING IN MEDICINE, PART H, MECHANICAL ENGINEERING PUBLICATIONS LTD, LONDON, GB, BD. 209, Nr. H03, 1995, Seiten 169-175, XP001010059 ISSN: 0954-4119 ist eine stereophotogrametische Röntgenanalyse zum Erfassen der Verschiebung der femoralen Komponenten bei dem Ersetzen einer Hüfte bekannt. Dabei werden kugelförmige Stahl-Marker in den Femur während der Operation eingesetzt und der Patient während einer Röntgenaufnahme in einen Kalibrierungs-Rahmen gegeben.

Es ist eine Aufgabe der Erfindung Verfahren und Vorrichtungen vorzuschlagen, mit welchen ein Implantat in einer Körperstruktur, insbesondere ein Femur-Implantat eines künstlichen Hüftgelenks, möglichst gut im Femur platziert werden kann bzw. welche eine Vorbereitung eines zum Beispiel chirurgischen Eingriffs ermöglichen.

Diese Aufgabe wird durch Verfahren und Vorrichtungen mit den Merkmalen der unabhängigen Patentansprüche gelöst. Vorteilhafte Ausführungsformen ergeben sich aus den abhängigen Ansprüchen.

Bei dem erfindungsgemäßen Verfahren zum Bestimmen von charakteristischen Achsen einer Körperstruktur, wie zum Beispiel zum Bestimmen der dreidimensionalen Lage der Schenkelhals- oder Neck-Achse oder der Schaftachse eines Oberschenkelknochens oder Femurs, wird mindestens eine und bevorzugt zwei oder mehr zweidimensionale Aufnahmen aus unterschiedlichen Richtungen von jeweils einem ersten und optional auch einem davon verschiedenen zweiten Bereich der Körperstruktur erstellt. Die Aufnahmen können zum Beispiel zweidimensionale Röntgenaufnahmen der Bereiche der Körperstruktur sein, welche zum Beispiel mit einem C-Bogen gemacht werden. Aus der mindestens einen Aufnahme eines ersten Bereichs der Körperstruktur, wie zum Beispiel aus einer Aufnahme des Femurschaftes, kann die Lage einer charakteristischen Achse, wie zum Beispiel die Lage der Schaft-Achse, manuell oder mittels eines bildverarbeitenden Algorithmus zum Beispiel durch einen Vergleich mit einem generischen Modell, welches eine Information zur Lage der charakteristischen Achse enthält, automatisch bestimmt werden, wobei die Schenkelhals-Achse zum Beispiel auch als Mittelachse oder etwa in der Mitte liegend zwischen den Konturen oder Begrenzungen eines oder mehrerer zweidimensionaler Schenkelhalsbilder der Körperstruktur ermittelt werden kann. Dabei kann z. B. eine Symmetrieachse oder eine nahe der Symmetrieachse liegende oder eine eine Symmetrieachse annähernde Achse als Mittelachse bestimmt werden.

Da bei nur einer einzigen zweidimensionalen Aufnahme der Körperstruktur eine zwischen den Körper- oder Begrenzungsstrukturen etwa in der Mitte liegende Achse oder eine durch einen Vergleich mit einem generischen Modell ermittelte Achse durch Rückprojektion lediglich eine erste Ebene definiert, in welcher die betreffende Achse liegt, wird vorzugsweise eine weitere Information zur Präzisierung der räumlichen Lage der jeweiligen Achse gewonnen. Dies kann zum Beispiel mittels einer weiteren zweidimensionalen Röntgenaufnahme der Körperstruktur, wie zum Beispiel des Schenkelhalses aus einer anderen Richtung oder unter einem anderen Winkel geschehen, wobei auch hierbei zum Beispiel eine etwa in der Mitte zwischen den Konturen liegende Achse oder eine durch einen Vergleich mit einem generischen Modell ermittelte Achse bestimmt wird, durch welche mittels Rückprojektion die Lage einer zweiten Ebene bestimmt werden kann, wobei die Schnittgerade der aus den ersten und zweiten Aufnahmen ermittelten Rückprojektionsebenen die räumliche Lage der Achse definiert. Weiterhin kann mindestens eine und bevorzugt zwei oder mehr Aufnahmen aus unterschiedlichen Richtungen bzw. verschiedenen Winkeln eines zweiten Bereichs der Körperstruktur, wie zum Beispiel des Femurkopfes, erzeugt werden, wobei ein statistisches, generisches oder Referenz-Modell, welches als zweidimensionaler oder dreidimensionaler Datensatz vorliegen kann, mit der mindestens einen zweidimensionalen Aufnahme des zweiten Bereichs verglichen und so verformt wird, bis das verformte generische Modell in etwa oder vollständig deckungsgleich mit der mindestens einen Aufnahme des zweiten Bereiches der Körperstruktur ist. Ein solches Verfahren wird als "Matching" bezeichnet und ist im Stand der Technik bekannt. Es wird auf die diesbezüglichen Lehren der EP 1 348 393 A1, EP 1 348 394 A1 und die Europäische Patentanmeldung Nr. 03 015 607.9 der Anmelderin, sowie auf die WO 01/22368 A1 verwiesen, deren Lehren bezüglich der Durchführung eines Matching-Verfahrens in diese Anmeldung aufgenommen werden. Wurde das Matching-Verfahren durchgeführt, so ist die Abbildungs- oder Verschiebungs- bzw. Verformungs-Vorschrift bekannt, um das generische Modell auf die zweidimensionale Aufnahme der Körperstruktur bzw. des Körperstrukturbereiches abzubilden, so dass, wenn die in dem generischen Modell vorgegebene Lage der Schenkelhals-Achse mit dieser Abbildungsvorschrift abgebildet wird, die Lage der Schenkelhals-Achse in der zweidimensionalen Aufnahme oder im dreidimensionalen Raum bestimmt werden kann. Sind zwei oder mehr Aufnahmen von der Körperstruktur bzw. dem Schenkelhals gemacht worden, so kann die Lage der Schenkelhals-Achse eindeutig im Raum definiert werden.

Erfindungsgemäß kann also aus bevorzugt mindestens zwei Aufnahmen von zum Beispiel jeweils dem Schenkelhals und dem Schaft eines Femurs durch direkte Berechnung einer zwischen den Konturen des Schaftes liegenden Mittelachse durch Rückprojektion die Lage der Schaftachse und unter Zuhilfenahme eines generischen Modells die Lage der Schenkelhalsachse bestimmt werden, so dass, wenn eine mit Markern oder einem Referenzstern verbundene Körperstruktur, wie zum Beispiel ein Femur, registriert ist, die räumliche Lage der Schenkelhals- und Schaft-Achse des Femurs ermittelt werden kann und zum Beispiel ein Femurimplantat so im Femur positioniert oder zu einer entsprechenden Stelle navigiert und dort ausgerichtet oder eingesetzt werden kann, dass das Femurimplantat in Bezug auf die Schaft- und Schenkelhals-Achse optimal angeordnet ist, wodurch spätere Komplikationen zum Beispiel aufgrund einer zu starken Beanspruchung oder Abnutzung erheblich verringert werden können. Erfindungsgemäß ist es nicht mehr erforderlich eine CT-Aufnahme durchzuführen.

Obwohl die Erfindung zum Bestimmen von charakteristischen Achsen einer Körperstruktur anhand der Untersuchung eines Oberschenkelknochens oder Femurs beschrieben wird, können mit dem erfmdungsgemäßen Verfahren auch ein oder mehrere charakteristische Achsen einer anderen Körperstruktur, wie zum Beispiel des Unterschenkelknochens bzw. der Tibia oder anderer Knochen, wie zum Beispiel von Wirbeln oder des Armes bestimmt werden.

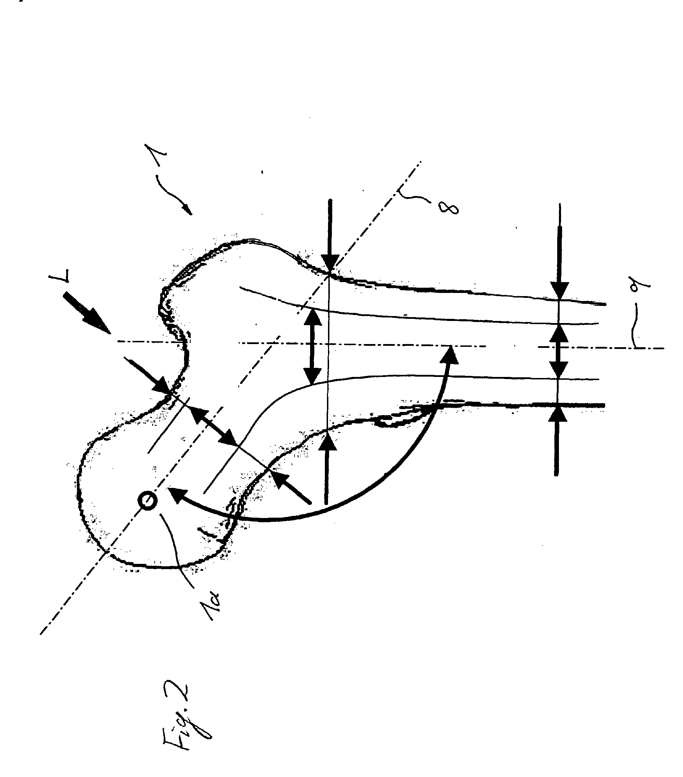

Bevorzugt wird als mindestens eine zweidimensionale Aufnahme der Körperstruktur und insbesondere eines Femurs eine Anterior-Posterior-Aufnahme zum Beispiel mit einem C-Bogen erzeugt, was beispielsweise zu einer wie in Figur 2 gezeigten zweidimensionalen Abbildung der Konturen des proximalen Teils des Femurs oder Femurkopfes führt. Vorzugsweise wird als eine weitere Aufnahme eine so genannte Lauenstein-Aufnahme durchgeführt, um zum Beispiel die Lage der Schenkelhals-Achse zu bestimmen, wobei eine Aufnahme aus der in Figur 2 mit L bezeichneten Richtung erstellt wird.

Vorzugsweise werden bei den zweidimensionalen Aufnahmen der Körperstruktur die Konturen, welche charakteristische Strukturen oder Begrenzungen der Körperstruktur definieren, mittels bekannter Kanten-Detektions(edge-detection)-Verfahren extrahiert, wie zum Beispiel mit der Methode der orthogonalen Kurven wie in Hemant Tagare: "Deformable 2-D Template Maching Using Orthogonal Curves" in IEEE Transactions on Medical Imaging 16(1): 108-117 (1997) beschrieben oder mittels eines genetischen Algorithmus, wie in J. Holland: "Adaption in Natural and Artificial Systems", The University of Michigan Press (1975) beschrieben.

Bevorzugt wird die Körperstruktur vor der Aufnahme vorregistriert, wobei die Körperstruktur zum Beispiel auch nur grob ausgerichtet oder in eine für die jeweilige Aufnahme vorteilhafte Ausrichtung gebracht werden kann, um eine möglichst gute Abbildung von Konturen, Strukturen und/oder charakteristischen Merkmalen der Körperstruktur oder von Bereichen davon zu erhalten. Die Vorregistrierung kann auf bekannte Art unter Verwendung von zum Beispiel an der Körperstruktur, wie z. B. einem Knochen, angebrachten Referenzsternen oder anhand von Landmarks, also charakteristischen und zum Beispiel vorstehenden oder markanten Punkten der Körperstruktur selber, erfolgen. Zum Beispiel kann kinematisch, also durch Bewegung eines Gelenks in verschiedene Richtungen, ein Rotationszentrum oder mit einem Pointer einzelne charakteristische Punkte wie z. B. die Epikondylen bestimmt werden.

Weiterhin können zum Beispiel mittels eines bekannten mechanischen Pointers, auf welchem Marker angeordnet sind, Oberflächenpunkte der Körperstruktur erfasst werden, indem zum Beispiel eine Spitze des Pointers auf eine oder mehrere Oberflächenpunkte der Körperstruktur gesetzt wird, so dass z. B. ein grobes Modell der Oberfläche der betreffenden Körperstruktur erstellt werden kann, womit eine Vorregistrierung der Körperstruktur zur Erzeugung einer oder mehrerer zweidimensionaler Röntgenaufnahmen einfach möglich ist.

Als generisches Modell der Körperstruktur oder eines Teils der Körperstruktur können eine oder mehrere zweidimensionale Referenz-Aufnahmen oder Referenz-Datensätze einer Referenz-Körperstruktur verwendet werden, welche zum Beispiel aus unterschiedlichen Richtungen erzeugt wurden, wobei beispielsweise zunächst von einem Algorithmus derjenige Referenz-Datensatz als generisches Modell für das erfindungsgemäße Verfahren ausgewählt wird, welcher die größte Ähnlichkeit mit der zweidimensionalen Abbildung oder Aufnahme der betreffenden Körperstruktur hat. Alternativ kann, wenn bei einer registrierten Körperstruktur der Aufnahmewinkel bekannt ist, diejenige zweidimensionale Abbildung verwendet werden, welche bei einer Aufnahme aus der gleichen Richtung oder einer davon möglichst nur gering abweichenden Richtung bei einem Referenzmodell erzeugt wurde.

Alternativ oder ergänzend dazu kann als generisches Modell auch ein dreidimensionaler Datensatz verwendet werden, welcher zum Beispiel durch CT-Aufnahmen eines Referenzkörpers oder einer Referenz-Körperstruktur, wie z. B. eines Referenz-Femurs, gewonnen wurde, wobei aus einem solchen dreidimensionalen generischen Modell zweidimensionale Abbildungen z. B. als so genannte DRRs (Digital Reconstructed Radiograph) erzeugt werden können. Dabei werden DRRs vorzugsweise als virtuelle Röntgenbilder des generischen Modells aus der gleichen Richtung erzeugt, aus welcher die Aufnahmen der Körperstruktur erzeugt wurden, was mit hoher Präzision und Genauigkeit möglich ist, wenn die betreffende Körperstruktur vorher wie oben beschrieben grob oder fein vorregistriert wurde. Diese als zweidimensionale generische Datensätze verwendeten DRRs können wie oben beschrieben mit den Körperstrukturaufnahmen einer Person gematcht werden, um die Lage einer oder mehrerer charakteristischer Achsen, wie zum Beispiel der Schenkelhals-Achse eines Femurkopfes, zu bestimmen.

Die oben erwähnten zweidimensionalen oder dreidimensionalen generischen Modelle oder Referenzdatensätze enthalten als Information die Lage oder den Verlauf von charakteristischen Achsen, wie zum Beispiel der Schenkelhals-Achse und der Schaftachse, in dem generischen Modell oder in dem generischen Datensatz, wobei nach dem matching des oder der Referenzdatensätze auf die Aufnahmen der Körperstruktur der Verlauf der gematchten charakteristischen Achsen und somit der Verlauf, also die räumliche Orientierung oder Ausrichtung, der charakteristischen Achsen in der Körperstruktur selbst bekannt ist.

Durch die Rückprojektion der Aufnahmen A1 und A2 kann außer den Außenkonturen auch der Verlauf von Innenkonturen der Körperstruktur, wie zum Beispiel ein Modell der Begrenzungsfläche der Kortikalis ermittelt werden.

Gemäß einem weiteren Aspekt bezieht sich die Erfindung auf ein Navigationsverfahren für ein Instrument oder ein Implantat, wobei das Instrument oder das Implantat so navigiert wird, dass es zu einer durch oder in Bezug auf eine oder mehr wie oben beschrieben bestimmte charakteristische Achsen an oder in der Körperstruktur positioniert wird.

Weiterhin bezieht sich die Erfindung auf ein Computerprogramm, welches, wenn es in einen Computer geladen ist oder auf einem Computer läuft, ein wie oben beschriebenes Verfahren ausführen kann. Des Weiteren bezieht sich die Erfindung auf ein Programmspeichermedium oder ein Computerprogrammprodukt mit einem solchen Programm.

Eine erfindungsgemäße Vorrichtung weist ein Aufnahmegerät zur Erzeugung von zweidimensionalen Abbildungen einer Körperstruktur, wie zum Beispiel ein Röntgengerät oder einen C-Bogen, auf, welcher mit einer Recheneinheit verbunden ist, die einerseits zum Beispiel eine als Mittel- oder angenäherte Symmetrie-Achse definierte erste Achse einer Körperstruktur, wie zum Beispiel eine Schaftachse, berechnen kann und welche andererseits aus einer Datenbank Referenzdaten oder generische Daten erhält, welche der entsprechenden Körperstruktur zugeordnet sind, so dass die Recheneinheit ein Matching-Verfahren durchführen kann, das heißt zum Beispiel eine Abbildungsvorschrift ermittelt, durch welche das generische Modell auf die von der Aufnahmevorrichtung ermittelten Bilder oder Daten abgebildet wird, um so durch Anwendung dieser Abbildungsvorschrift auf die in dem generischen Modell enthaltenen Daten zum Verlauf einer charakteristischen Achse den Verlauf der charakteristischen Achse in der Aufnahme und damit in der untersuchten Körperstruktur zu erhalten.

Vorzugsweise ist diese Vorrichtung mit einem Navigationssystem verbunden, so dass die von der Vorrichtung ermittelten Daten zum räumlichen Verlauf der charakteristischen Achse der Körperstruktur von dem Navigationssystem verwendet werden können, um zum Beispiel ein Instrument oder ein Implantat zu navigieren oder an einer vorgegebenen Stelle in einer definierten Ausrichtung zu positionieren.

Gemäß einem weiteren Aspekt, der unabhängig von oder in Verbindung mit dem oben beschriebenen Verfahren verwendet werden kann, bezieht sich die Erfindung auf ein Verfahren zur Approximation von dreidimensionalen Konturpunkten eines Objektes, welches auch eine wie oben beschriebene Körperstruktur sein kann. Dabei wird mindestens eine zweidimensionale Projektionsaufnahme und bevorzugt mindestens zwei oder mehr zweidimensionale Aufnahmen, wie zum Beispiel Röntgenaufnahmen, des Objektes oder der Körperstruktur aus bevorzugt unterschiedlichen Winkeln oder Richtungen verwendet, um die dreidimensionalen Konturpunkte oder Oberflächenpunkte des Objektes zu approximieren oder zu bestimmen. Es werden zunächst die zweidimensionalen äußeren Konturen des abgebildeten Objektes in den Projektionsaufnahmen bestimmt, wobei die die Kontur bildenden Punkte als Konturpunkte bezeichnet werden. Weiterhin werden ein oder mehrere dreidimensionale Referenzpunkte bestimmt, wie zum Beispiel geschätzte Mittelpunkte in bestimmten Schichten des Objektes. Sollen zum Beispiel dreidimensionale Kontur- oder Oberflächenpunkte eines zylinderförmigen Objektes bestimmt oder approximiert werden, so werden vorteilhaft Punkte entlang der Mittelachse des zylinderförmigen Objektes als dreidimensionale Referenzpunkte verwendet. Jeder so bestimmte dreidimensionale Referenzpunkt wird auf die zweidimensionalen Projektionsebenen der Abbildung des Objektes projiziert. Es werden mindestens ein und bevorzugt jeweils zwei äußere Konturpunkte in den jeweiligen Projektionen bezüglich des Referenzpunktes berechnet, wobei der Referenzpunkt vorzugsweise annähernd oder exakt der Mittelpunkt der beiden Konturpunkte sein sollte. Zum Beispiel können die Konturpunkte orthogonal zur Mittelachse in der zweidimensionalen Projektion liegen.

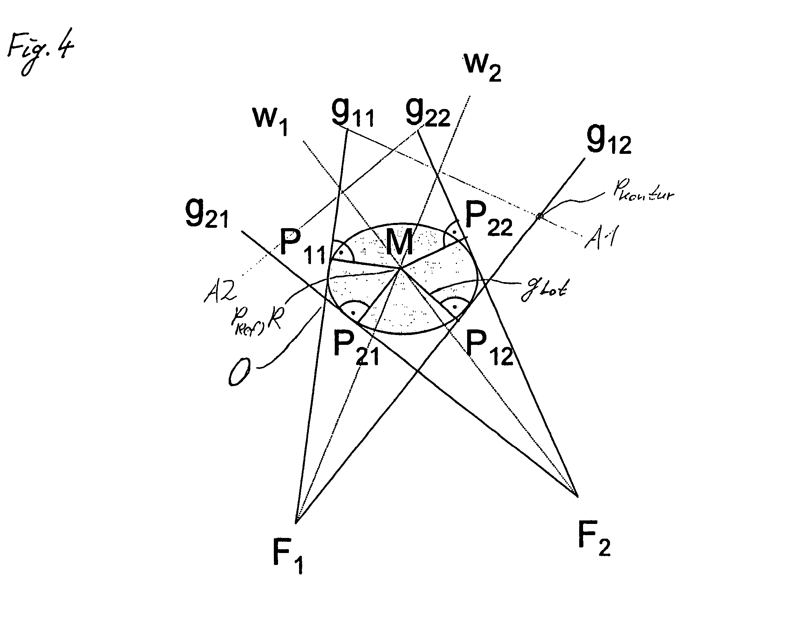

Optional kann auch die Bestimmung des Mittelpunktes verfeinert werden, indem für jeden Konturpunkt die Projektionsgerade berechnet wird, wie zum Beispiel die Geraden gᵢⱼ in Figur 4. Für die in den einzelnen Aufnahmen definierten Paare aus Projektionsgeraden wird jeweils die winkelhalbierende Ebene, wie zum Beispiel w₁ und w₂ in Figur 4, berechnet, d.h. die Winkelhalbierende, die orthogonal zu der durch die beiden Projektionsgeraden definierten Ebene steht. Die winkelhalbierenden Ebenen werden geschnitten, um eine Mittellinie zu erhalten, welche in Figur 4 mit M bezeichnet ist. Anschließend wird der Mittelpunkt berechnet als Schnittpunkt oder Approximation der Mittellinie vs. Referenzebene, Referenzachse oder Referenzpunkt. Die Referenzebene wird zum Beispiel festgelegt als Ebene durch den dreidimensionalen Referenzpunkt orthogonal zur dreidimensionalen Mittelachse als Referenzachse.

Die dreidimensionalen Konturpunkte werden berechnet, indem das Lot von dem berechneten Mittelpunkt auf die Projektionsgeraden g₁₁, g₁₂, g₂₁ und g₂₂ gefällt wird. Die Fußpunkte des jeweiligen Lotes, in Figur 4 mit P₁₁, P_{12,} P_{21,} P₂₂ bezeichnet, ergeben die Approximationen an die Konturpunkte des Objektes O. Alternativ können auch andere Berechnungsmethoden verwendet werden, bei welchen zusätzliche geometrische Nebenbedingungen berücksichtigt werden. Zum Beispiel kann die Entfernung zwischen dem Mittelpunkt oder der Kontur, wie zum Beispiel einem Radius, als Nebenbedingung verwendet werden, wenn diese bekannt ist.

Optional können zusätzliche Punkte zum Beispiel auf der Rückseite der Kontur berechnet werden. Falls nur zwei Projektionsaufnahmen des Projektes verwendet werden, liegen die rekonstruierten Punkte meist auf einer Seite des Objektes. Bei der Erzeugung eines dreidimensionalen Formmodells aus einem generischen Modell kann dies zu Instabilitäten führen, da ähnliche Konstellationen von dreidimensionalen Punkten in einem verhältnismäßig engen Bereich, beispielsweise zu erheblich unterschiedlichen Objektgrößen führen können. Deshalb ist eine zusätzliche geometrische orientierte Rekonstruktion von Punkten auf der Objektrückseite vorteilhaft. Alternativ können natürlich auch zusätzliche Aufnahmen akquiriert werden, was jedoch bei ionisierenden Bildgebungsverfahren die Strahlenbelastung für den Patienten und das Operationsteam erhöht.

Es werden dabei Punkte in Verlängerung der Linie Projektionszentrum und gefundener/geschätzter Mittelpunkt oder Referenzpunkt berechnet. Der Distanzwert aus vorliegenden Informationen, wie zum Beispiel Abstände der bereits gefundenen dreidimensionalen Konturpunkte, wird geschätzt. In vielen Fällen ist eine ÜberkreuzBestimmung der Abstände angebracht, wobei der Abstand für eine zweite Aufnahme aus den Abständen des Referenzpunktes zu Kantenpunkten aus einer ersten Aufnahme ermittelt wird. Dies ist gerade bei elliptischen Objekten von Bedeutung, da hier die Ausdehnung in der einen Richtung annähernd den Abständen im Mittelpunkt/Mittellinie zur Kontur in der anderen Richtung entspricht.

Anschließend kann optional eine dreidimensionale Struktur aus einem generischen Form-Modell auf der Basis der rekonstruierten Punkte, wie zum Beispiel ein statistisches Formmodell, zum Beispiel für Knochenstrukturen, rekonstruiert werden.

Bei zylindrischen oder etwa zylinderförmigen Objekten, wie zum Beispiel der Schaftachse eines Femurs, ist es vorteilhaft, wenn die Aufnahmerichtung zur Erstellung der zweidimensionalen Abbildungen des dreidimensionalen Objektes annähernd orthogonal zur Mittelachse des Objektes sind.

Somit kann eine approximierende Rekonstruktion von dreidimensionalen Punkten aus zweidimensionalen Projektionsaufnahmen unter Berücksichtigung geometrischer Randbedingungen durchgeführt werden. Erfindungsgemäß bietet sich der Vorteil, dass geometrische Nebenbedingungen in vielen Fällen eine zwingendere und robustere Detektion einer Form ermöglichen. Punkteaufnahmestrategien können gezielt optimiert werden. Damit lässt sich zum Beispiel auch die Strahlenbelastung für den Patienten verringern. Die geometrische Rekonstruktion erlaubt eine Trennung von dreidimensionaler Punkterekonstruktion und dreidimensionaler Modellerzeugung, also die Erzeugung der dreidimensionalen Form aus einem generischen Modell. Dadurch kann die dreidimensionale Modellerzeugung erheblich beschleunigt werden, da ein Abgleich der dreidimensionalen Informationen mit zweidimensionalen Informationen, wie zum Beispiel zweidimensionalen Konturpunkten bzw. zweidimensionalen Pixelkoordinaten/Grauwerten und deren Projektionsgeraden nicht innerhalb des Modellerzegungsalgorithmus vollzogen werden muss. Der Algorithmus kann voll auf dreidimensionale Informationen aufbauen. Es sind somit wesentlich effizientere Algorithmen möglich.

Im Stand der Technik wird bei der Rekonstruktion von dreidimensionalen Punkten davon ausgegangen, dass die Konturpunkte in der einen Aufnahme eins-zu-eins mit den Konturpunkten in dem anderen Bild korrespondieren. Diese Annahme ist bei manchen dünnen Strukturen, wie zum Beispiel der oberen Pubiskontur, berechtigt und liefert hierbei auch sehr gute Ergebnisse. Bei anderen Strukturen, zum Beispiel bei runden/zylinderförmigen Objekten, gibt es keine dreidimensionale Korrespondenz der gefundnen zweidimensionalen Konturpunkte, wenn sich die Aufnahmen um einen hinreichend großen Winkel unterscheiden. Diese Differenz ist aber für eine akkurate dreidimensionale Rekonstruktion notwendig.

Die Erfindung wird nachfolgend anhand von Ausführungsbeispielen beschrieben. Es zeigen:
- Figur 1: eine erfindungsgemäße Vorrichtung;
- Figur 2: eine zweidimensionale Aufnahme eines Femurkopfes in Anterior-Posterior-Richtung zur Erläuterung der Lage der Schenkelhals- und Schaftachsen;
- Figur 3: ein Ablaufdiagramm für eine Ausführungsform des erfindungsgemäßen Verfahrens; und
- Figur 4: das Prinzip der Erstellung eines dreidimensionalen Körperstrukturmodells aus zweidimensionalen Aufnahmen.

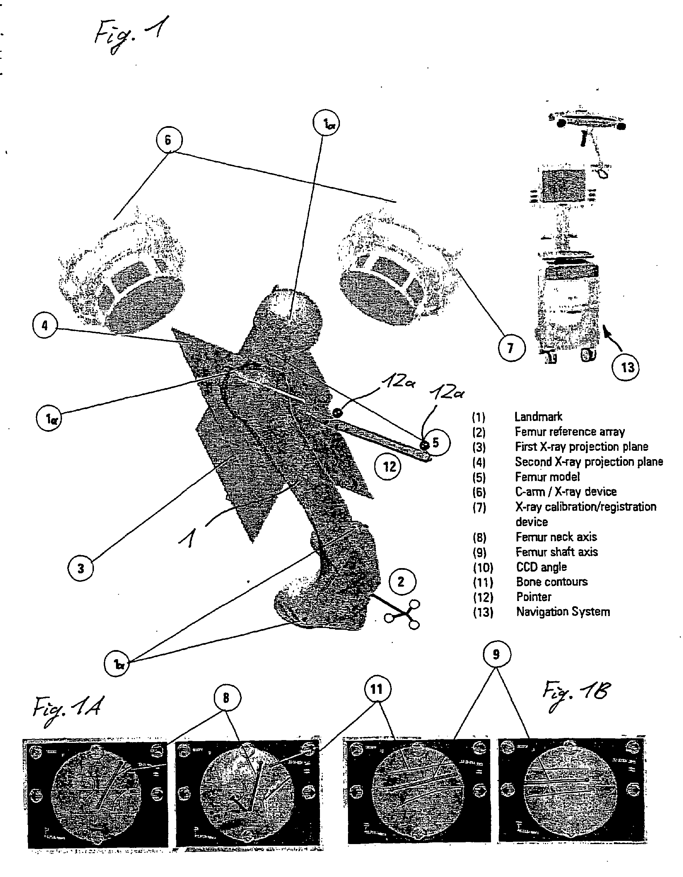

Figur 1 zeigt einen Femur 1, welcher charakteristische Punkte oder Landmarks 1a aufweist. An dem Femur 1 ist ein Referenzstern 2 als Femur Reference Array angebracht. Mit der Spitze eines Pointers 12, an welchem reflektierende Marker 12a angebracht sind, können die charakteristischen Punkte oder Landmarks 1 a des Femurs 1 erfasst werden, wodurch der Femur 1 zumindest grob vorregistriert werden kann.

Mittels einer oder mehrerer Röntgenvorrichtungen 6, welche an einem C-Bogen angebracht sein können und zum Kalibrieren oder Registrieren ebenfalls Marker 7 aufweisen können, werden aus zwei in Bezug auf den Femur um 90° versetzte Richtungen Aufnahmen in einer ersten Ebene 3 und in einer um 90° dazu gedrehten zweiten Ebene 4 erzeugt, welche in Figur 1A für den Schenkelhals und in Figur 1B für den Schaft dargestellt sind.

Mit dem oben beschriebenen Verfahren wird von einer Recheneinheit die Lage der Schaftachse 9 errechnet und nach einem Vergleich mit einem generischen Modell wird die Lage der Schenkelhalsachse 8 bestimmt.

Figur 2 zeigt eine zweidimensionale Abbildung des Schenkelhalses in der in Figur 1 gezeigten ersten Projektionsebene 3.

Wie in Figur 2 gezeigt, verläuft die Schenkelhalsachse 8 durch den charakteristischen Punkt 1a des Schenkelhalses. In dem Femur 1 verläuft der anatomische Markkanal, wobei die Schaftachse 9 etwa in der Mitte des anatomischen Markkanales liegt. Die Schenkelhalsachse 8 und die Schaftachse 9 bilden den so genannten CCD (Centrum-Column-Diaphysen) -Winkel. Für die Planung und Durchführung eines chirurgischen Eingriffs ist es insbesondere vorteilhaft, den Verlauf der Knochenaußenkontur des Schaftes und Schenkelhalses am proximalen Femur zu kennen.

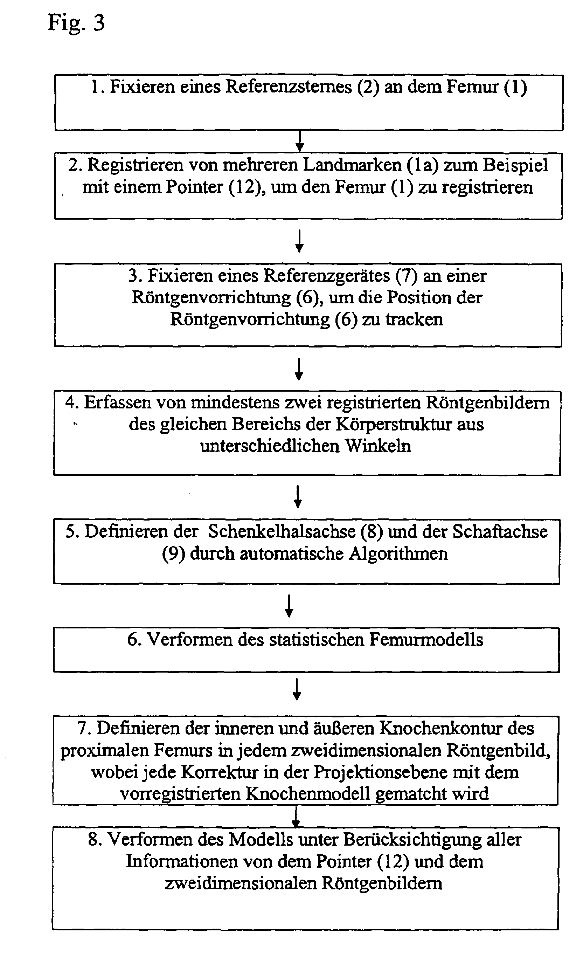

Figur 3 zeigt ein Ablaufdiagramm für die Durchführung des erfindungsgemäßen Verfahrens, wobei in Schritt 1 ein Referenzstern 2 an dem Femurknochen 1 angebracht wird. Anschließend werden mehrere Landmarken 1a des Femurs 1 zum Beispiel mit einem Pointer 12 erfasst, um den Femur 1 zu registrieren. Ein Referenzstern 7 ist oder wird an einem Röntgengerät 6 befestigt, um die Position des Röntgengerätes relativ zur Position des Femurs zu erfassen, um durch Rückprojektion die erfassten Röntgenbilder dem Femur 1 zuordnen zu können.

Es werden mindestens zwei registrierte Röntgenbilder eines oder mehrerer interessierender Bereiche aus unterschiedlichen Winkeln aufgenommen, wie zum Beispiel zwei Röntgenbilder des Schenkelhalses und zwei Röntgenbilder des Schafts des Femurs 1.

Anschließend werden die Schenkelhalsachsen 8 und die Schaftachsen 9 in jedem Bild manuell oder durch automatische Algorithmen wie oben beschrieben bestimmt.

Ein statistisches Femurmodell wird verformt, wobei das an Hand von Figur 4 beschriebene Rückprojektionsverfahren verwendet werden kann, um ein generisches Modell anzupassen oder sogar um ohne Verwendung eines generischen Modells ein Näherungsmodell der Kontur durch Ermittlung einer Punktewolke von validen dreidimensionalen Punkten und/oder durch Verwendung schichtweiser Ellipsoide zu erstellen.

Anschließend werden die innere und die äußere Knochenkontur des proximalen Femurs in jedem zweidimensionalen Röntgenbild definiert, wobei jede Kontur in der Projektionsebene mit dem vorregistrierten Knochen- oder Femurmodell gematcht wird.

Schließlich wird das statistische Modell verformt unter Berücksichtigung sämtlicher Informationen, welche aus der Erfassung mit Punkten mit dem Pointer 12 und den zweidimensionalen Röntgenbildern gewonnen wurde.

## Patentansprüche

1. Verfahren zum Bestimmen einer charakteristischen Achse (8) einer Körperstruktur (1), wobei mindestens zwei zweidimensionale Röntgenbilder als Aufnahmen eines Bereiches der Körperstruktur (1) aus verschiedenen Richtungen oder Winkeln erzeugt werden und die mindestens zwei Aufnahmen des Bereiches mit jeweils einem generischen Modell des betreffenden Bereiches, welches eine Information über die Lage der charakteristischen Achse enthält, verglichen wird, wobei jeweils eine Abbildungsvorschrift zur Abbildung des jeweiligen generischen Modells auf die jeweilige Aufnahme des Bereichs ermittelt wird und die jeweilige Lage der charakteristischen Achse im jeweiligen generischen Modell mit der ermittelten Abbildungsvorschrift abgebildet wird, um die jeweilige Lage der charakteristischen Achse in der zweidimensionalen Abbildung der Körperstruktur zu erhalten und aus den mindestens zwei charakteristischen Achsen in den zweidimensionalen Abbildungen durch Rückprojektion die dreidimensionale Lage der charakteristischen Achse bestimmt wird, wobei die Schnittgerade der aus den ersten und zweiten Aufnahmen ermittelten Rückprojektionsebenen die räumliche Lage der Achse (8) definiert

2. Verfahren nach Anspruch 1, wobei aus mindestens zwei weiteren Aufnahmen eines weiteren Bereiches die Lage einer weiteren charakteristischen Achse (9) der Körperstruktur (1) als Schnittgerade der Rückprojektionsebenen der Mittelachsen der Körperkonturen in den zweidimensionalen Abbildungen berechnet wird.

3. Verfahren nach Anspruch 1 oder 2, wobei die Körperstruktur ein Femur (1), die eine charakteristische Achse die Schenkelhalsachse (8) und die weitere charakteristische Achse die Schaftachse (9) ist.

4. Verfahren nach einem der vorhergehenden Ansprüche, wobei mindestens, drei oder mehr Aufnahmen desselben Bereichs der Körperstruktur (1) aus verschiedenen Richtungen oder Winkeln erstellt werden.

5. Verfahren nach Anspruch 2 oder einem der drei vorhergehenden Ansprüche, sofern sie sich auf Anspruch 2 rückbeziehen, wobei die Konturen der Körperstruktur mit der Methode der orthogonalen Kurven- und/oder einem genetischen Algorithmus extrahiert werden.

6. Verfahren nach einem der vorhergehenden Ansprüche, wobei die Körperstruktur vor den Aufnahmen insbesondere unter Verwendung von Landmarken (1a) und/oder kinematisch ermittelten Punkten vorregistriert wird.

7. Verfahren nach einem der vorhergehenden Ansprüche, wobei als generisches Modell ein Datensatz von zweidimensionalen Abbildungen eines Referenzmodells aus unterschiedlichen Richtungen verwendet wird.

8. Verfahren nach einem der Ansprüche 1 bis 7, wobei als generisches Modell ein dreidimensionales Modell verwendet wird, aus welchem zweidimensionale Abbildungen, insbesondere Digital Reconstructed Radiographs (DRRs) gewonnen werden können.

9. Navigationsverfahren für ein Instrument oder ein Implantat, wobei das Instrument oder das Implantat so navigiert wird, dass es zu einer durch oder in Bezug auf eine oder mehr charakteristische Achsen (8, 9), welche mit einem Verfahren nach einem der vorhergehenden Ansprüche bestimmt wurden, an oder in der Körperstruktur (1) positioniert wird.

10. Computerprogramm, welches, wenn es in einen Computer geladen ist oder auf einem Computer läuft, ein Verfahren nach einem der vorhergehenden Ansprüche ausführen kann.

11. Programmspeichermedium oder Computerprogrammprodukt mit einem Computerprogramm nach dem vorhergehenden Anspruch.

12. Vorrichtung zum Bestimmen einer charakteristischen Achse (8) einer Körperstruktur (1), welche das Verfahren gemäß Anspruch 1 realisiert.

13. Vorrichtung nach Anspruch 12 mit einem Navigationssystem (13), das mit einer Recheneinheit verbunden ist und von dieser Daten zum Verlauf der charakteristischen Achsen (8, 9) der Körperstruktur (1) erhält.

## Claims

1. Method of determining a characteristic axis (8) of a body structure (1), whereby at least two two-dimensional X-ray images are produced as views of a region of the body structure (1) from different directions or angles, and the at least two views of the region are compared respectively with a generic model of the relevant region which contains information about the position of the characteristic axis, and a respective imaging rule for reproducing the respective generic model on the respective view of the region is determined, and the respective position of the characteristic axis is reproduced in the respective generic model by means of the determined imaging rule in order to obtain the respective position of the characteristic axis in the two-dimensional reproduction of the body structure, and the three-dimensional position of the characteristic axis is determined from the at least two characteristic axes in the two-dimensional images by back projection, and the intersection line of the back projection planes determined from the first and second views defines the spatial position of the axis (8).

2. Method as claimed in claim 1, whereby the position of another characteristic axis (9) of the body structure (1) is calculated from at least two other views of another region as the intersection line of the back projection planes of the mid-axes of the body contours in the two-dimensional images.

3. Method as claimed in claim 1 or 2, whereby the body structure is a femur (1), one characteristic axis is the axis of the neck of the femur (8) and the other characteristic axis is the shaft axis (9).

4. Method as claimed in one of the preceding claims, whereby at least three or more views of the same region of the body structure (1) are produced from different directions or angles.

5. Method as claimed in claim 2 or one of the three preceding claims dependent on claim 2, whereby the contours of the body structure are extracted using the method of orthogonal curves and/or a genetic algorithm.

6. Method as claimed in one of the preceding claims, whereby the body structure is pre-registered prior to taking the views, in particular using land marks(1a) and/or kinematically determined points.

7. Method as claimed in one of the preceding claims, whereby a data set of two-dimensional images of a reference model taken from different directions is used as the generic model.

8. Method as claimed in one of claims 1 to 7, whereby a three-dimensional model is used as the generic model, from which two-dimensional images, in particular Digital Reconstructed Radiographs (DRRs), can be obtained.

9. Navigation method for an instrument or implant, whereby the instrument or implant is navigated so that it is positioned on or in the body structure (1) with respect to, by or by reference to one or more characteristic axes (8, 9) determined by a method as claimed in one of the preceding claims.

10. Computer programme which, when loaded into a computer or run on a computer, is able to implement a method as claimed in one of the preceding claims.

11. Programme storage medium or computer programme product with a computer programme as claimed in the preceding claim.

12. Device for determining a characteristic axis (8) of a body structure (1) which implements the method as claimed in claim 1.

13. Device as claimed in claim 12 with a navigation system (13), which is connected to a computer unit and the latter contains data pertaining to the position of the characteristic axes (8, 9) of the body structure (1).

## Revendications

1. Procédé pour déterminer un axe (8) caractéristique d'une structure corporelle (1), dans lequel on produit au moins deux radiographies bidimensionnelles en tant qu'images d'une zone de la structure corporelle (1), à partir de différentes directions ou différents angles, et on compare au moins deux images de cette zone avec chaque fois un modèle générique de la zone concernée, qui contient une information relative à la position de l'axe caractéristique, dans lequel on détermine chaque fois une règle de reproduction pour reproduire le modèle générique respectif sur l'image respective de la zone, et on reproduit la position respective de l'axe caractéristique dans le modèle générique respectif avec la règle de reproduction déterminée, afin d'obtenir la position respective de l'axe caractéristique dans la reproduction bidimensionnelle de la structure corporelle, et on détermine la position tridimensionnelle de l'axe caractéristique à partir des au moins deux axes caractéristiques, dans les reproductions bidimensionnelles, par rétroprojection, la droite d'intersection des plans de rétroprojection, déterminée à partir des premières et secondes images, définissant la position spatiale de l'axe (8).

2. Procédé selon la revendication 1, dans lequel on calcule, à partir d'au moins deux autres images d'une autre zone, la position d'un autre axe (9) caractéristique de la structure corporelle (1), en tant que droite d'intersection des plans de rétroprojection des axes médians des contours corporels dans les reproductions bidimensionnelles.

3. Procédé selon l'une quelconque des revendications 1 ou 2, dans lequel la structure corporelle est un fémur (1), un axe caractéristique est l'axe (8) du col du fémur et l'autre axe caractéristique est l'axe de tige(9).

4. Procédé selon l'une quelconque des revendications 1 à 3, dans lequel on réalise trois images ou plus de la même zone de la structure corporelle (1), à partir de différentes directions ou différents angles.

5. Procédé selon la revendication 2 ou l'une quelconque des revendications 2 à 4, dans la mesure où elles se réfèrent à la revendication 2, les contours de la structure corporelle étant extraits avec la méthode des algorithmes de courbes orthogonales et/ou d'un algorithme génétique.

6. Procédé selon l'une quelconque des revendications 1 à 5, dans lequel la structure corporelle est pré-enregistrée avant la réalisation des images, en particulier en utilisant des repères (1a) et/ou des points déterminés de manière cinématique.

7. Procédé selon l'une quelconque des revendications 1 à 6, dans lequel on utilise comme modèle générique un ensemble de données de reproductions bidimensionnelles d'un modèle de référence, à partir de différentes directions.

8. Procédé selon l'une quelconque des revendications 1 à 7, dans lequel on utilise comme modèle générique un modèle tridimensionnel, à partir duquel il est possible d'obtenir des reproductions bidimensionnelles, en particulier des radiographies reconstruites numériquement (DRR).

9. Procédé de navigation pour un instrument ou un implant, dans lequel l'instrument ou l'implant est navigué de manière à être positionné sur ou dans la structure corporelle (1), par rapport ou en référence à un ou plusieurs axes caractéristiques (8, 9) qui ont été déterminés par un procédé selon l'une quelconque des revendications 1 à 8.

10. Programme d'ordinateur qui, lorsqu'il est chargé dans un ordinateur ou tourne sur un ordinateur, permet de mettre en oeuvre un procédé selon l'une quelconque des revendications 1 à 9.

11. Support de mémoire de programme ou produit de programme d'ordinateur avec un programme d'ordinateur selon la revendication 10.

12. Dispositif pour déterminer un axe caractéristique (2) d'une structure corporelle (1), qui réalise le procédé selon la revendication 1.

13. Dispositif selon la revendication 12 avec un système de navigation (13) qui est connecté à une unité informatique et reçoit de celle-ci des données relatives au parcours des axes caractéristiques (8, 9) de la structure corporelle (1).
